# EUROPÄISCHE PATENTSCHRIFT

(11) **EP 1 848 317 B1**
(45) Veröffentlichungstag und Bekanntmachung des Hinweises auf die Patenterteilung: **21.07.2010**
(21) Anmeldenummer: 05818006.8
(22) Anmeldetag: 26.11.2005
(51) Int. Cl.: A47L 9/28, H01M 2/10

(54) **REINIGUNGSGERÄT**
CLEANING APPARATUS
APPAREIL DE NETTOYAGE

(30) Priorität: 11.02.2005 DE 102005007923
(43) Veröffentlichungstag der Anmeldung: 31.10.2007
(73) Patentinhaber: Alfred Kärcher GmbH & Co. KG, 71364 Winnenden (DE)
(72) Erfinder: FRANK, Jürgen, 71737 Kirchberg (DE); HENSEL, Maic, 71522 Backnang (DE); LEPOLD, Holger, 71307 Nellmersbach (DE)
(74) Vertreter: Hoeger, Stellrecht & Partner Patentanwälte
(86) Internationale Anmeldenummer: PCT/EP2005/012654
(87) Internationale Veröffentlichungsnummer: WO 2006/084495

(56) Entgegenhaltungen:
- DE-A1- 3 743 082
- PATENT ABSTRACTS OF JAPAN Bd. 014, Nr. 485 (C-0772), 23. Oktober 1990 (1990-10-23) & JP 02 200230 A (MATSUSHITA ELECTRIC IND CO LTD; others: 01), 8. August 1990 (1990-08-08)

## Beschreibung

Die Erfindung betrifft ein Reinigungsgerät, insbesondere ein Sauggerät, mit elektromotorischen Reinigungsaggregat und mit einem Gehäuse, das eine Batteriekammer aufweist zur Aufnahme von mindestens einer wiederaufladbaren Batterie, wobei in der Batteriekammer eine Verbindungseinrichtung mit einem mechanischen Halteteil und einem elektrischen Steckverbinderteil angeordnet ist zur Herstellung einer elektrischen und mechanischen Verbindung zwischen der Batterie und dem Reinigungsgerät. Ein solches Reinigungsgerät ist z.B. aus der JP 2 200 230 A bekannt.

Mittels derartiger Reinigungsgeräte kann eine Fläche, beispielsweise eine Bodenfläche, gereinigt werden. Das Reinigungsgerät umfaßt hierzu ein Reinigungsaggregat mit einem Elektromotor. Zur Energieversorgung des Reinigungsaggregats kann dieses üblicherweise an eine Netzspannung angeschlossen werden mit Hilfe eines Anschlußkabels. Alternativ kann die Energieversorgung durch eine wiederaufladbare Batterie sichergestellt werden, die in die Batteriekammer einsetzbar ist. Innerhalb der Batteriekammer befindet sich eine Verbindungseinrichtung zur Herstellung einer mechanischen und elektrischen Verbindung der Batterie mit dem Reinigungsgerät. Die Lagefixierung der Batterie erfolgt mittels des mechanischen Halteteils, und mit Hilfe des elektrischen Steckverbinderteils kann die elektrische Verbindung zwischen der Batterie und dem elektromotorischen Reinigungsaggregat hergestellt werden.

Üblicherweise sind die zum Einsatz kommenden wiederaufladbaren Batterien nicht nur hinsichtlich ihrer elektrischen Eigenschaften, insbesondere der Batteriespannung, sondern auch im Hinblick auf ihre Bauform an das zu bestückende Reinigungsgerät angepaßt. Dies hat den Vorteil, daß die Form der Batteriekammer exakt der Bauform der aufzunehmenden Batterien entsprechen kann und die Batterien in der Batteriekammer auf einfache Weise sicher gehalten werden können. Damit ist allerdings der Nachteil verbunden, daß der Benutzer über die jeweils angepaßten Batterien verfügen muß und andere Batterien, die der Benutzer beispielsweise bereits für Elektrowerkzeuge benutzt, nicht zum Einsatz kommen können.

Aufgabe der vorliegenden Erfindung ist es, ein Reinigungsgerät der eingangs genannten Art derart weiterzubilden, daß Batterien unterschiedlicher Bauform zum Einsatz kommen können.

Diese Aufgabe wird bei einem Reinigungsgerät der gattungsgemäßen Art erfindungsgemäß dadurch gelöst, daß das Halteteil in der Batteriekammer lösbar gehalten ist und das Steckverbinderteil wahlweise mit dem Halteteil oder einer Kammerwand der Batteriekammer lösbar verbindbar ist.

Die Energieversorgung des erfindungsgemäßen Reinigungsgeräts kann sowohl mittels in ihrer Bauform speziell an dieses angepaßten wiederaufladbaren Batterien als auch mittels Fremdbatterien erfolgen, deren Bauform nicht an die Form der Batteriekammer angepaßt ist. Kommen an das Reinigungsgerät angepaßte Batterien zum Einsatz, so kann hierzu das Halteteil in der Batteriekammer befestigt werden und das Steckverbinderteil kann mit dem Halteteil verbunden werden. Mindestens eine an das Reinigungsgerät angepaßte Batterie kann dann in die Batteriekammer eingesetzt werden, wobei mittels des Halteteils eine mechanische Lagefixierung der Batterie innerhalb der Batteriekammer sichergestellt ist und mittels des Steckverbinderteils die elektrische Verbindung der Batterie mit dem elektromotorischen Reinigungsaggregat gewährleistet ist. Soll die Energieversorgung mittels einer Fremdbatterie erfolgen, so ist es hierzu lediglich erforderlich, das Halteteil der Batteriekammer zu entnehmen und das elektrische Steckverbinderteil mit der Kammerwand zu verbinden. Die Fremdbatterie kann dann mittels eines Adapters, der einerseits an die Fremdbatterie und andererseits an das Steckverbinderteil angepaßt ist, innerhalb der Batteriekammer sicher gehalten und über das Steckverbinderteil mit dem Reinigungsaggregat elektrisch verbunden werden. Für den Benutzer ist es somit lediglich erforderlich, das Halteteil der Batteriekammer zu entnehmen und das Steckverbinderteil, das über elektrische Verbindungsleitungen mit dem elektromotorischen Reinigungsaggregat in elektrischer Verbindung steht, anstatt am Halteteil nunmehr an der Kammerwand zu befestigen. Es ist somit nicht erforderlich, die elektrische Verbindung zwischen dem Steckverbinderteil und dem elektromotorischen Reinigungsaggregat aufzutrennen, es wird lediglich die Lage des Steckverbinderteils geändert, die es zur Herstellung einer elektrischen Verbindung mit der Batterie einnimmt. Zur Herstellung einer Verbindung mit einer an das Reinigungsgerät angepaßten Batterie läßt sich das Steckverbinderteil mit dem Halteteil verbinden, das innerhalb der Batteriekammer festgelegt werden kann, und zur Herstellung einer Verbindung mit einer Fremdbatterie kann das Steckverbinderteil mit der Kammerwand verbunden und das Halteteil kann der Batteriekammer entnommen werden.

Durch die Entnahme des Halteteils aus der Batteriekammer wird der Innenraum der Batteriekammer vergrößert, so daß auch Fremdbatterien mit einem größeren Bauvolumen als an das Reinigungsgerät angepaßte Batterien in die Batteriekammer einsetzbar sind. Der Benutzer hat somit insbesondere die Möglichkeit, Fremdbatterien, über die er bereits im Zusammenhang mit der Energieversorgung seiner Elektrowerkzeuge, beispielsweise eines Elektrobohrers oder Elektroschraubers, verfügt, auch zur Energieversorgung des Reinigungsgeräts zu verwenden.

Günstig ist es, wenn die Kammerwand der Batteriekammer eine Steckverbinderaufnahme zum Einsetzen des Steckverbinderteils aufweist. Hierbei kann vorgesehen sein, daß das Steckverbinderteil mit der Steckverbinderaufnahme verrastbar ist.

Das Einsetzen des Steckverbinderteils in die Steckverbinderaufnahme wird bei einer vorteilhaften Ausführungsform dadurch erleichtert, daß an der Steckverbinderaufnahme und am Steckverbinderteil miteinander zusammenwirkende Führungselemente angeordnet sind.

Bei einer kostengünstig herstellbaren Ausführungsform umfassen die Führungselemente Führungsrippen und diese aufnehmende Führungsnuten.

Es kann beispielsweise vorgesehen sein, daß am Steckverbinderteil an einander abgewandten Seiten jeweils eine Führungsnut angeordnet ist, in die eine an der Kammerwand gehaltene Führungsrippe eintaucht. Es kann allerdings auch eine umgekehrte Anordnung zum Einsatz kommen dergestalt, daß das Steckverbinderteil an einander abgewandten Seiten jeweils eine Führungsrippe aufweist, die in eine an der Kammerwand gehaltene Führungsnut eintaucht.

Bei einer bevorzugten Ausführungsform ist das Halteteil mit der Kammerwand lösbar verbindbar, wobei es die Steckverbinderaufnahme überdeckt. Bei in die

Batteriekammer eingesetztem Halteteil ist somit die Steckverbinderaufnahme vom Halteteil abgedeckt und durch dieses vor mechanischen Einwirkungen geschützt.

Bevorzugt weist das Halteteil ein Aufnahmefach auf zur Aufnahme des Steckverbinderteils. Das Steckverbinderteil kann somit in das Aufnahmefach des Halteteils eingesetzt werden, falls das Reinigungsgerät mit an dieses angepaßten Batterien bestückt werden soll.

Das Einsetzen des Steckverbinderteils in das Aufnahmefach kann dadurch vereinfacht werden, daß am Aufnahmefach und am Steckverbinderteil miteinander zusammenwirkende Führungselemente angeordnet sind.

Die Führungselemente können Führungsrippen und diese aufnehmende Führungsnuten umfassen.

Es kann beispielsweise vorgesehen sein, daß am Steckverbinderteil an einander abgewandten Seiten jeweils eine Führungsnut angeordnet ist, in die eine am Halteteil gehaltene Führungsrippe eintaucht. Alternativ kann vorgesehen sein, daß das Steckverbinderteil an einander abgewandten Seiten jeweils eine Führungsrippe aufweist, die in eine am Halteteil gehaltene Führungsnut eintaucht.

Zur Herstellung einer mechanisch belastbaren Lagefixierung einer an das Reinigungsgerät angepaßten Batterie ist bei einer besonders bevorzugten Ausführungsform vorgesehen, daß das Halteteil mindestens ein Formschlußelement umfaßt zur Herstellung eines Formschlusses mit der Batterie. Das Formschlußelement kann beispielsweise als Führungsrippe oder Führungsnut oder Schwalbenschwanzführung ausgestaltet sein.

Von besonderem Vorteil ist es, wenn das Halteteil zwei zueinander beabstandete Formschlußelemente aufweist, zwischen denen das Steckverbinderteil positionierbar ist. Die Formschlußelemente wirken mit korrespondierenden Formschlußteilen der Batterie zusammen, und beim Herstellen der mechanischen Verbindung zwischen der Batterie und den Formschlußelementen wird gleichzeitig über das zwischen den Formschlußelementen angeordnete Steckverbinderteil eine elektrische Verbindung hergestellt. Das Steckverbinderteil kann hierzu mehrere Steckkontakte aufweisen, auf die die Batterie aufsetzbar ist beim Herstellen der formschlüssigen Verbindung zwischen der Batterie und dem Halteteil.

Vorzugsweise sind die beiden Formschlußelemente über eine Stirnwand des Halteteils starr miteinander verbunden und begrenzen zusammen mit der Stirnwand ein Aufnahmefach zur Aufnahme des Steckverbinderteils. Das Steckverbinderteil kann somit zwischen die beiden Formschlußelemente eingesetzt werden, wobei die Stirnwand einen Anschlag für das Steckverbinderteil ausbildet.

Günstig ist es hierbei, wenn die Stirnwand eine Öffnung aufweist, die eine Erhebung des Steckverbinderteils aufnimmt. Die Erhebung kann die Öffnung durchgreifen und eine Lagefixierung des Steckverbinderteils am Halteteil ermöglichen.

Das Herstellen der mechanischen Verbindung zwischen der Batterie und dem Halteteil wird bei einer vorteilhaften Ausführungsform dadurch erleichtert, daß das mindestens eine Formschlußelement an einer Stirnseite des Halteteils angeordnet ist, die bei in die Batteriekammer eingesetztem Halteteil dem Innern der Batteriekammer zugewandt ist. Bei einer derartigen Ausgestaltung ist das Formschlußelement für den Benutzer gut zugänglich, er kann auf einfache Weise die Batterie mit dem mindestens einen Formschlußelement in Eingriff bringen. Beispielsweise kann das Formschlußelement eine sich in Einsetzrichtung der Batterie erstreckende Führungsschiene ausbilden, auf die die Batterie beim Einsetzen in die Batteriekammer aufschiebbar ist.

Eine besonders stabile Halterung der an das Reinigungsgerät angepaßten Batterie innerhalb der Batteriekammer kann dadurch erzielt werden, daß das Halteteil stirnseitig oberhalb des mindestens einen Formschlußelements eine Anlagefläche zur Anlage der Batterie ausbildet. An der Anlagefläche kann die Batterie flächig abgestützt werden.

Bei einer bevorzugten Ausführungsform ist die Kammerwand, an der das Steckverbinderteil lösbar festlegbar ist und mit der das Halteteil bei einer vorteilhaften Ausgestaltung lösbar verbindbar ist, als verschwenkbare Klappe ausgestaltet, die eine Zugangsöffnung der Batteriekammer verschließt. Die Klappe ist zwischen einer Schließstellung, in der sie die Batteriekammer verschließt und einer Offenstellung, in der die Batteriekammer zum Auswechseln von mindestens einer Batterie zugänglich ist, hin und her verschwenkbar, und die Klappe kann der Halterung sowohl von an das Reinigungsgerät angepaßten Batterien als auch von Fremdbatterien dienen, die wahlweise in das Batteriefach eingesetzt werden können. Zum Einsetzen einer Batterie ist es lediglich erforderlich, die Klappe nach außen in ihre Offenstellung zu verschwenken. Kommt eine an das Reinigungsgerät angepaßte Batterie zum Einsatz, so wird die Batterie vorzugsweise an dem innenseitig an der Klappe lösbar gehaltenen Halteteil befestigt, mit dem das Steckverbinderteil lösbar verbindbar ist. Kommt eine Fremdbatterie zum Einsatz, so wird diese an einem Adapter befestigt, der mit dem innenseitig mit der Klappe lösbar verbindbaren Steckverbinderteil verbindbar ist.

Die an der Innenseite der Klappe erfolgende bevorzugte Befestigung wahlweise des Halteteils oder eines Adapters kann beispielsweise mit Hilfe einer Schnapp- oder Klemmverbindung erfolgen oder aber auch mittels einer Schraubverbindung.

Vorzugsweise ist das Reinigungsgerät als Sauggerät ausgestaltet mit einem Reinigungsaggregat in Form eines Saugaggregats und mit einem Schmutzsammelbehälter, der einen Saugeinlaß aufweist und mit dem Saugaggregat in Strömungsverbindung steht.

Insbesondere bei Ausgestaltung des Reinigunsgeräts als Sauggerät ist es günstig, wenn das Gehäuse ein Gehäuseunterteil und ein auf dieses aufsetzbares Gehäuseoberteil umfaßt, wobei das Reinigungsaggregat und die Batteriekammer im Gehäuseoberteil angeordnet sind. Eine derartige Anordnung hat den Vorteil, daß beim Trennen von Gehäuseunterteil und Gehäuseoberteil keine elektrischen Verbindungen zwischen dem Steckverbinderteil und dem elektromotorischen Reinigungsaggregat aufgetrennt werden müssen.

Im Hinblick auf eine möglichst kompakte Bauform des Reinigungsgeräts ist es günstig, wenn die Batteriekammer seitlich neben dem Reinigungsaggregat angeordnet ist. Bei Ausgestaltung des Reinigungsgerätes als Saugaggregat ist es von Vorteil, wenn sich die Batteriekammer bis unterhalb der Oberkante des Schmutzsammelbehälters erstreckt.

Die nachfolgende Beschreibung einer bevorzugten Ausführungsform der Erfindung dient im Zusammenhang mit der Zeichnung der näheren Erläuterung. Es zeigen:

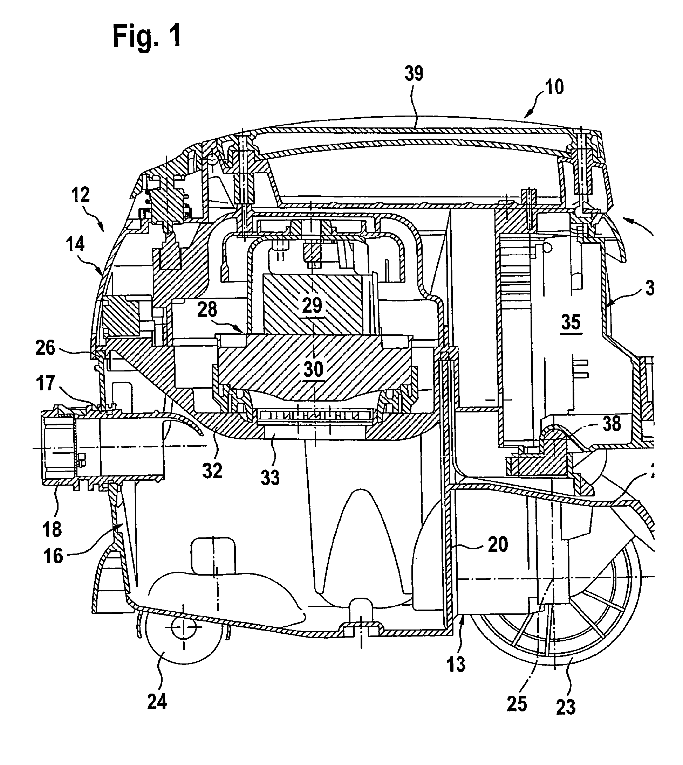

- Figur 1:: eine schematische Schnittansicht eines Reinigungsgeräts mit einer Batteriekammer;
- Figur 2:: eine perspektivische Darstellung einer die Batteriekammer abdec- kenden Klappe mit einer innenseitig an der Klappe gehaltenen, an das Reinigungsgerät angepaßten Batterie;
- Figur 3:: eine Schnittansicht längs der Linie 3-3 in Figur 2;
- Figur 4:: eine Ansicht der Klappe aus Figur 2 nach Art einer Explosionsdar- stellung;
- Figur 5:: eine perspektivische Darstellung der Klappe aus Figur 2 mit einer innenseitig an der Klappe gehaltenen Fremdbatterie und
- Figur 6:: eine Schnittansicht längs der Linie 6-6 in Figur 5.

In der Zeichnung ist ein erfindungsgemäßes Reinigungsgerät in Form eines Sauggeräts 10 schematisch dargestellt. Dieses umfaßt ein Gehäuse 12 mit einem Gehäuseunterteil 13 und einem Gehäuseoberteil 14. Das Gehäuseunterteil 13 bildet einen Schmutzsammelbehälter 16 aus mit einem Saugeinlaß 17, der von einem Saugstutzen 18 durchgriffen ist. Außenseitig ist an den Saugstutzen 18 in üblicher Weise ein an sich bekannter und deshalb in der Zeichnung nicht dargestellter Saugschlauch anschließbar, der an seinem freien Ende eine Saugdüse tragen kann. Auf der dem Saugstutzen 18 abgewandten Rückseite 20 des Schmutzsammelbehälters 16 ist ungefähr in halber Höhe an den Schmutzsammelbehälter eine im wesentlichen horizontal ausgerichtete Stufe 21 angeformt, die an ihrem freien Ende eine nach unten gerichtete Schutzwand 22 trägt. Unterhalb der Stufe 21 sind am Gehäuseunterteil 13 um eine gemeinsame Drehachse 25 frei drehbar zwei Laufräder gehalten, wobei in der Zeichnung nur ein Laufrad 23 dargestellt ist, und unterhalb des Saugstutzens 18 ist am Gehäuseunterteil 13 ein Stützrad 24 drehbar gehalten.

Das Gehäuseoberteil 14 sitzt auf einer Oberkante in Form eines oberen Dichtrandes 26 des Schmutzsammelbehälters 16 auf und umgibt ein Reinigungsaggregat in Form eines Saugaggregats 28 mit einem Elektromotor 29 und einer von diesem angetriebenen Saugturbine 30. Das Saugaggregat 28 wird von einer in den Schmutzsammelbehälter 16 eintauchenden Stützwand 32 gehalten, die einen Saugauslaß 33 aufweist, über den das Saugaggregat 28 mit dem Schutzsammelbehälter 16 in Strömungsverbindung steht.

Seitlich neben dem Saugaggregat 28 weist das Gehäuseoberteil 14 eine Batteriekammer 35 auf, die auf der Stufe 21 aufsitzt und zur Energieversorgung des Saugaggregats 28 zwei wiederaufladbare Batterien aufnimmt. Alternativ kann das Saugaggregat 28 auch an eine Netzspannung angeschlossen werden. Hierzu weist das Sauggerät 10 ein Anschlußkabel auf, das an sich bekannt ist und deshalb in der Zeichnung nicht dargestellt ist.

Die Batteriekammer 35 ist über eine an der dem Saugstutzen 18 abgewandten Rückseite des Gehäuseoberteils 14 angeordnete Klappe 37 zugänglich, die eine Kammerwand der Batteriekammer 35 ausbildet und um eine parallel zur Drehachse 25 ausgerichtete Schwenkachse 38 verschwenkbar ist.

Oberseitig weist das Gehäuseoberteil 14 einen Tragegriff 39 auf, mit dessen Hilfe das Gehäuseoberteil 14 vom Gehäuseunterteil 13 angehoben werden kann, so daß der Schmutzsammelbehälter 16 entleert werden kann.

Die Batteriekammer 35 kann mit zwei Batterien bestückt werden, wobei jedoch zum Betreiben des Sauggeräts 10 eine einzige Batterie ausreichend ist, so daß die zweite Batterie erst dann zum Einsatz kommt, wenn die erste Batterie entleert ist.

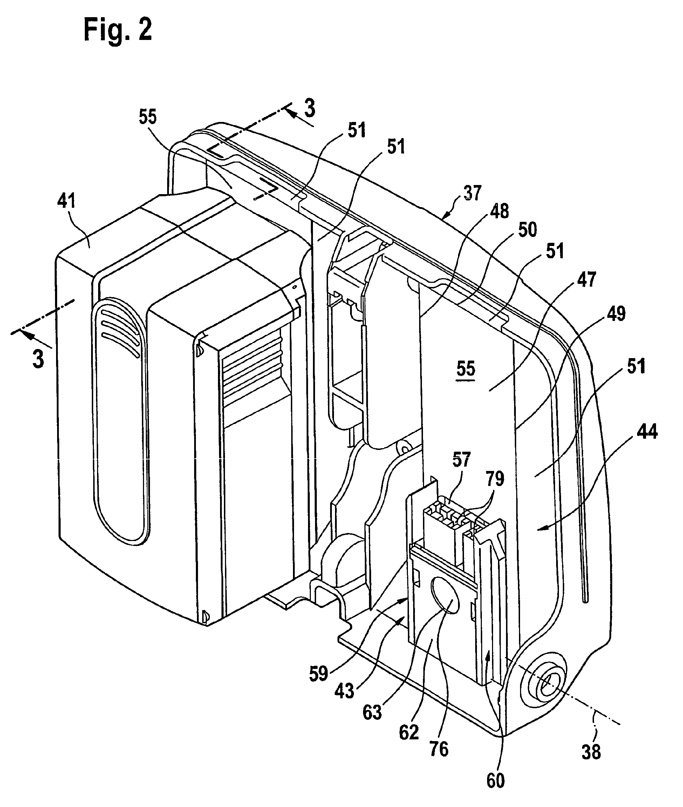

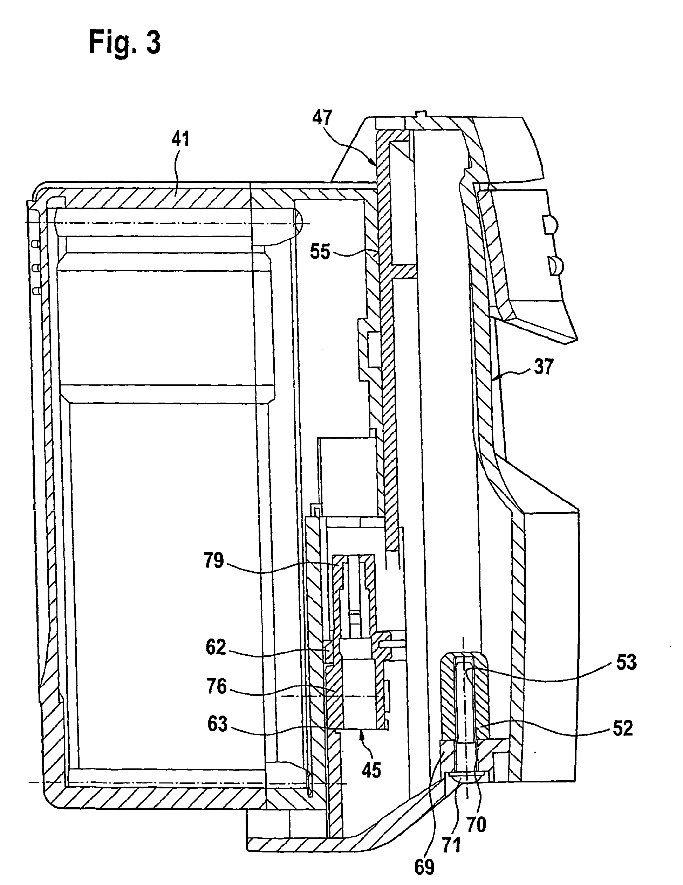

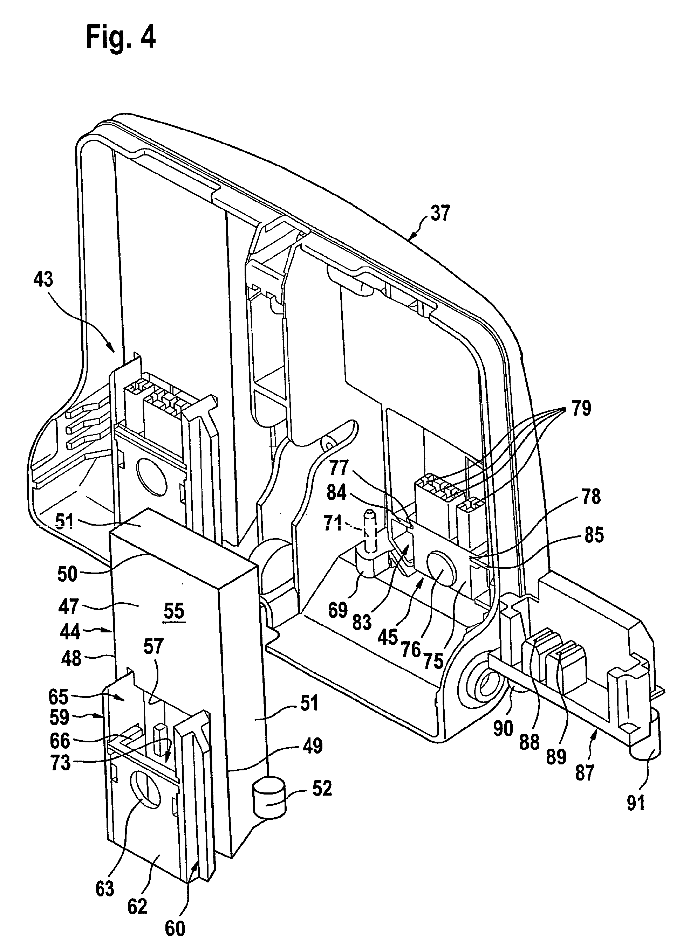

Eine in ihrer Bauform speziell an das Sauggerät 10 angepaßte Batterie 41 ist in den Figuren 2 und 3 dargestellt. Die mechanische und die elektrische Verbindung der Batterie 41 mit dem Sauggerät 10 erfolgt mittels einer Verbindungseinrichtung 43, die innenseitig an der Klappe 37 gehalten ist und ein mechanisches Halteteil 44 sowie ein elektrisches Steckverbinderteil 45 umfaßt. Wie insbesondere aus Figur 4 deutlich wird, weist das Halteteil 44 eine ebene, rechteckförmige Stirnwand 47 auf, von deren Längsseiten 48, 49 ebenso wie von deren oberer Querseite 50 Seitenwände 51 nach hinten, das heißt der Klappe 37 zugewandt, abstehen. An die längsseitigen Seitenwände 51 ist jeweils ein Schraubdom 52 angeformt, der ein Innengewinde 53 aufweist. Dies wird aus Figur 3 deutlich.

Die Stirnwand 47 bildet mit ihrem an die obere Querseite 50 angrenzenden Bereich eine Anlagefläche 55 aus, an die sich eine rechteckförmige Durchbrechung 57 anschließt, die längsseitig von zwei Formschlußelementen in Form T-förmiger Führungsschienen 59, 60 begrenzt ist. Die Führungsschienen 59, 60 sind über eine parallel zur Anlagefläche 55 ausgerichtete Verbindungswand 62 starr miteinander verbunden. Die Verbindungswand 62 weist eine kreisförmige Öffnung 63 auf und erstreckt sich in Längsrichtung der Führungsschiene 59, 60 lediglich entlang eines Teilbereichs der Führungsschienen 59, 60, so daß oberhalb der Verbindungswand 62 zwischen den beiden Führungsschienen 59, 60 ein Freiraum 65 definiert ist.

Die beiden Führungsschienen 59, 60 tragen in Höhe des oberen Rands der Verbindungswand 62 einander zugewandt jeweils eine Führungsrippe 66 bzw. 67.

Die Klappe 37 weist innenseitig Stützen 69 auf, auf die das Halteteil 44 mit den Schraubdomen 52 aufgesetzt werden kann. Die Stützen 69 sind mit einer Durchgangsbohrung 70 versehen, die von einer Verbindungsschraube 71 durchgriffen werden kann. Mittels der Verbindungsschrauben 71 kann somit das Halteteil 44 mit der Klappe 37 verschraubt werden.

Die Führungsschienen 59, 60 definieren in Kombination mit der Verbindungswand 62 ein Aufnahmefach 73, in die das Steckverbinderteil 45 rückseitig eingesetzt werden kann. Letzteres weist einen Stützblock 75 auf, der frontseitig eine kreiszylindrische Erhebung 76 trägt und an einander abgewandten Außenseiten jeweils eine Führungsnut 77 bzw. 78 aufweist. Oberseitig trägt der Stützblock 75 mehrere elektrische Steckkontakte 79. Wird das Steckverbinderteil 45 in das Aufnahmefach 73 des Halteteils 44 eingesetzt, so tauchen die Führungsrippen 66, 67 des Halteteils 44 in die Führungsnuten 77 bzw. 78 des Stützblocks 75 ein und die Erhebung 76 durchgreift die Öffnung 63 der Verbindungswand 62. Die Steckkontakte 79 nehmen dann eine Position innerhalb des Freiraums 65 ein, wie dies beispielsweise aus Figur 2 ersichtlich ist, und das Halteteil 44 kann anschließend mit der Klappe 37 verschraubt werden.

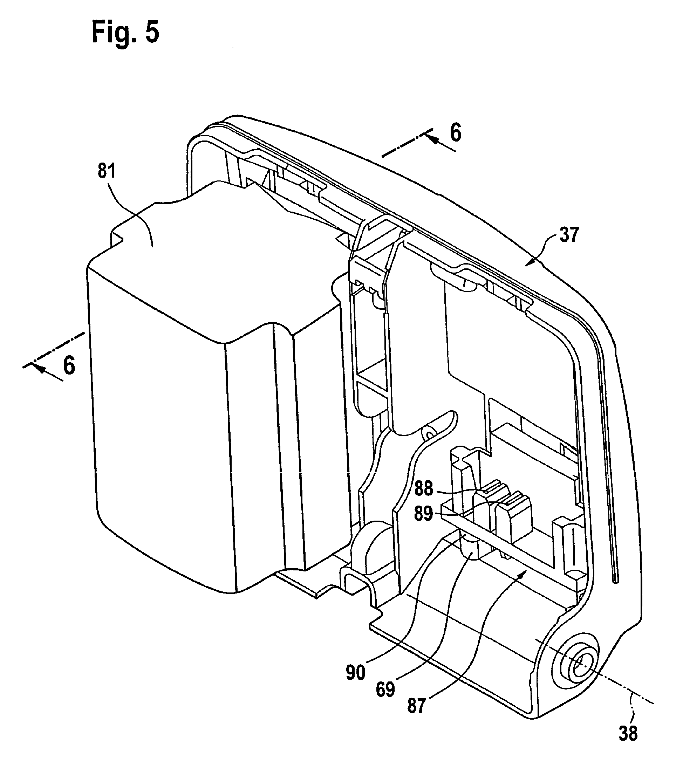

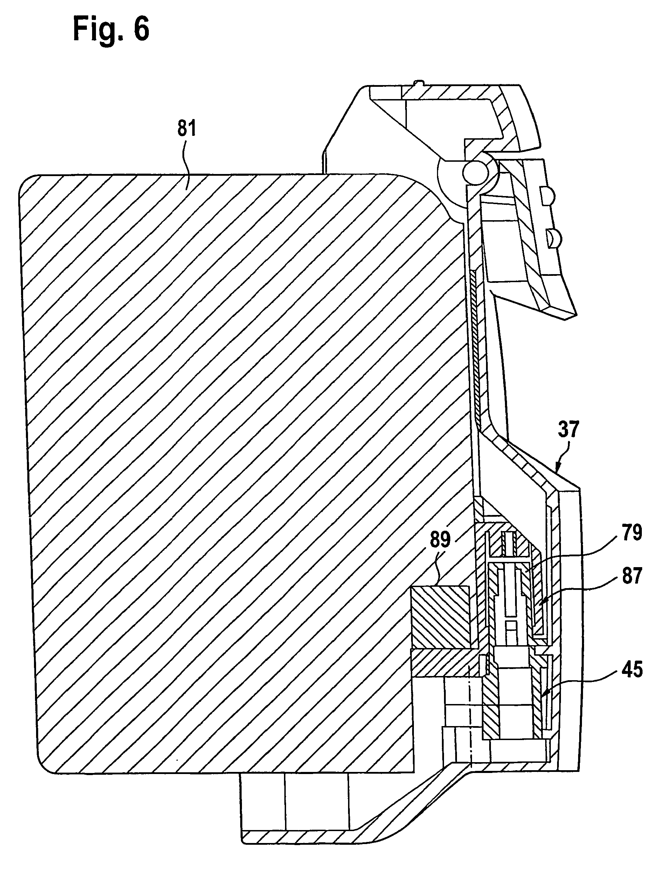

Das Halteteil 44 mit in das Aufnahmefach 73 eingesetztem und somit mit dem Halteteil 44 lösbar verbundenem Steckverbinderteil 45 kommt zum Einsatz, wenn die Batteriekammer 35 mit einer speziell an das Sauggerät 10 angepaßten Batterie 41 bestückt wird. Soll die Batteriekammer 35 jedoch mit einer Fremdbatterie 81 bestückt werden, wie sie in den Figuren 5 und 6 dargestellt ist, so wird das Halteteil 44 von der Klappe 37 entfernt, indem die Verbindungsschrauben 71 gelöst werden, und das Steckverbinderteil 45 wird dem Aufnahmefach 73 des Halteteils 44 entnommen. Das Steckverbinderteil 45 wird dann zur Herstellung einer lösbaren Verbindung mit der Klappe 37 in eine innenseitig an der Klappe 37 angeordnete Aufnahme 83 eingeführt, an der im Abstand zueinander zwei Führungsrippen 84, 85 gehalten sind, die zwischen sich den Sützblock 75 des Steckverbinderteils 45 aufnehmen, indem sie jeweils in eine Führungsnut 77 bzw. 78 des Stützblocks 75 eintauchen. Das Halteteil 44 kann der Batteriekammer 35 entnommen werden, und auf das in die Aufnahme 83 eingeführte Steckverbinderteil 45 kann ein einerseits an die zum Einsatz kommende Fremdbatterie 81 und andererseits an das Steckverbinderteil 45 angepaßter Adapter 87 aufgesetzt werden. Der Adapter 87 weist elektrische Kontaktelemente 88, 89 auf, an die die Fremdbatterie 81 anschließbar ist und die über innerhalb des Adapters 87 verlaufende, in der Zeichnung nicht dargestellte Verbindungsleitungen mit Anschlußkontakten des Adapters 87 verbunden sind, die mit den Steckkontakten 79 des Steckverbinderteils 45 elektrisch verbindbar sind.

Die wahlweise Befestigung des Steckverbinderteils 45 entweder am Halteteil 44 oder innenseitig an der Klappe 37 ermöglicht es somit auf konstruktiv einfache Weise, alternativ entweder speziell an das Sauggerät 10 angepaßte Batterien 41 oder Fremdbatterien 81 in die Batteriekammer 35 einzusetzen, wobei bei Einsatz einer Fremdbatterie 81 lediglich ein zusätzlicher Adapter 87 erforderlich ist, der in entsprechender Weise wie das Halteteil 44 mit Hilfe der Verbindungsschrauben 71 mit der Klappe 37 verschraubt werden kann. Hierzu weist der Adapter 87 zwei Schraubdome 90, 91 auf, die auf die Stützen 69 der Klappe 37 aufgesetzt werden können.

## Patentansprüche

1. Reinigungsgerät (10) mit einem elektromotorischen Reinigungsaggregat und einem Gehäuse (12), das eine Batteriekammer (35) aufweist zur Aufnahme von mindestens einer wiederaufladbaren Batterie (41), wobei in der Batteriekammer (35) eine Verbindungseinrichtung (43) mit einem mechanischen Halteteile (44) und einem elektrischen Steckverbinderteil (45) angeordnet ist zur Herstellung einer elektrischen und mechanischen Verbindung zwischen der Batterie (41) und dem Reinigungsgerät (10), **dadurch gekennzeichnet, daß** das Halteteil (44) in der Batteriekammer (35) lösbar gehalten ist und das Steckverbinderteil (45) wahlweise mit dem Halteteil (44) oder einer Kammerwand (37) der Batteriekammer (35) lösbar verbindbar ist.

2. Reinigungsgerät nach Anspruch 1, **dadurch gekennzeichnet, daß** die Kammerwand (37) eine Steckverbinderaufnahme (83) zum Einsetzen des Steckverbinderteils (45) aufweist.

3. Reinigungsgerät nach Anspruch 2, **dadurch gekennzeichnet, daß** an der Steckverbinderaufnahme (83) und am Steckverbinderteil (45) miteinander zusammenwirkende Führungselemente (84, 85, 77, 78) angeordnet sind.

4. Reinigungsgerät nach Anspruch 3, **dadurch gekennzeichnet, daß** die Führungselemente Führungsrippen (84, 85) und diese aufnehmende Führungsnuten (77, 78) umfassen.

5. Reinigungsgerät nach einem der voranstehenden Ansprüche, **dadurch gekennzeichnet, daß** am Steckverbinderteil (45) an einander abgewandten Seiten jeweils eine Führungsnut (77, 78) angeordnet ist, in die eine an der Kammerwand (37) gehaltene Führungsrippe (84, 85) eintaucht.

6. Reinigungsgerät nach einem der Ansprüche 2 bis 5, **dadurch gekennzeichnet, daß** das Halteteil (44) mit der Kammerwand (37) lösbar verbindbar ist, wobei es die Steckverbinderaufnahme (83) überdeckt.

7. Reinigungsgerät nach einem der voranstehenden Ansprüche, **dadurch gekennzeichnet, daß** das Halteteil (44) ein Aufnahmefach (73) zur Aufnahme des Steckverbinderteils (45) aufweist.

8. Reinigungsgerät nach Anspruch 7, **dadurch gekennzeichnet, daß** am Aufnahmefach (73) und am Steckverbinderteil (45) miteinander zusammenwirkende Führungselemente (66, 67, 77, 78) angeordnet sind.

9. Reinigungsgerät nach Anspruch 8, **dadurch gekennzeichnet, daß** die Führungselemente Führungsrippen (66, 67) und diese aufnehmende Führungsnuten (77, 78) umfassen.

10. Reinigungsgerät nach einem der voranstehenden Ansprüche, **dadurch gekennzeichnet, daß** am Steckverbinderteil (45) an einander abgewandten Seiten jeweils eine Führungsnut (77, 78) angeordnet ist, in die eine am Halteteil (44) gehaltene Führungsrippe (66, 67) eintaucht.

11. Reinigungsgerät nach einem der voranstehenden Ansprüche, **dadurch gekennzeichnet, daß** das Halteteil (44) mindestens ein Formschlußelement (59, 60) umfaßt zur Herstellung eines Formschlusses mit einer Batterie (41).

12. Reinigungsgerät nach Anspruch 11, **dadurch gekennzeichnet, daß** das mindestens eine Formschlußelement als Führungsschiene (59, 60) ausgestaltet ist.

13. Reinigungsgerät nach Anspruch 11 oder 12, **dadurch gekennzeichnet, daß** das Halteteil (44) zwei zueinander beabstandete Formschlußelemente (59, 60) aufweist, zwischen denen das Steckverbinderteil (45) positionierbar ist.

14. Reinigungsgerät nach Anspruch 13, **dadurch gekennzeichnet, daß** die beiden Formschlußelemente (59, 60) über eine Verbindungswand (62) des Halteteils (44) starr miteinander verbunden sind und zusammen mit der Verbindungswand (62) ein Aufnahmefach (73) zur Aufnahme des Steckverbinderteils (45) begrenzen.

15. Reinigungsgerät nach Anspruch 14, **dadurch gekennzeichnet, daß** die Verbindungswand (62) eine Öffnung (63) aufweist, die eine Erhebung (76) des Steckverbinderteils (45) aufnimmt.

16. Reinigungsgerät nach einem der Ansprüche 11 bis 15, **dadurch gekennzeichnet, daß** das mindestens eine Formschlußelement (59, 60) an einer Stirnseite des Halteteils (44) angeordnet ist, die bei in die Batteriekammer (35) eingesetztem Halteteil (44) dem Innern der Batteriekammer (35) zugewandt ist.

17. Reinigungsgerät nach Anspruch 16, **dadurch gekennzeichnet, daß** das Halteteil (44) stirnseitig oberhalb des mindestens einen Formschlußelements (59, 60) eine Anlagefläche (55) zur Anlage einer Batterie (41) ausbildet.

18. Reinigungsgerät nach einem der voranstehenden Ansprüche, **dadurch gekennzeichnet, daß** die Kammerwand als verschwenkbare Klappe (37) ausgestaltet ist, die eine Zugangsöffnung der Batteriekammer (35) verschließt.

19. Reinigungsgerät nach einem der voranstehenden Ansprüche, **dadurch gekennzeichnet, daß** die Batteriekammer (35) mit mindestens zwei wiederaufladbaren Batterien (41, 81) bestückbar ist, wobei das Reinigungsgerät (10) alternativ mit einer der in die Batteriekammern eingesetzten Batterien (41; 81) betreibbar ist.

20. Reinigungsgerät nach einem der voranstehenden Ansprüche, **dadurch gekennzeichnet, daß** das Reinigungsgerät als Sauggerät (10) ausgestaltet ist mit einem Reinigungsaggregat in Form eines Saugaggregats (28) und mit einem Schmutzsammelbehälter (16), der einen Saugeinlaß (17) aufweist und mit dem Saugaggregat (28) in Strömungsverbindung steht.

21. Reinigungsgerät nach einem der voranstehenden Ansprüche, **dadurch gekennzeichnet, daß** das Gehäuse (12) ein Gehäuseunterteil (13) und ein auf dieses aufsetzbares Gehäuseoberteil (14) umfaßt, wobei das Reinigungsaggregat (28) und die Batteriekammer (35) im Gehäuseoberteil (14) angeordnet sind.

## Claims

1. Cleaning apparatus (10) comprising a cleaning unit driven by an electric motor and a housing (12) which has a battery chamber (35) for accommodating at least one rechargeable battery (41), a connecting device (43) having a mechanical mounting part (44) and an electrical plug connector part (45) being disposed in the battery chamber (35) for establishing an electrical and mechanical connection between the battery (41) and the cleaning apparatus (10), **characterized in that** the mounting part (44) is detachably mounted in the battery chamber (35), and the plug connector part (45) is detachably connectable as desired to the mounting part (44) or to a chamber wall (37) of the battery chamber (35).

2. Cleaning apparatus according to Claim 1, **characterized in that** the chamber wall (37) has a plug connector receptacle (83) for inserting the plug connector part (45).

3. Cleaning apparatus according to Claim 2, **characterized in that** guide elements (84, 85, 77, 78) which interact with one another are disposed on the plug connector receptacle (83) and on the plug connector part (45).

4. Cleaning apparatus according to Claim 3, **characterized in that** the guide elements comprise guide ribs (84, 85) and guide grooves (77, 78) which receive these guide ribs.

5. Cleaning apparatus according to any one of the preceding Claims, **characterized in that** a guide groove (77, 78) is in each case disposed on the plug connector part (45) on sides which face away from each other, with a guide rib (84, 85) which is provided on the chamber wall (37) entering the guide groove.

6. Cleaning apparatus according to any one of Claims 2 to 5, **characterized in that** the mounting part (44) is detachably connectable to the chamber wall (37), with the mounting part covering the plug connector receptacle (83).

7. Cleaning apparatus according to any one of the preceding Claims, **characterized in that** the mounting part (44) has an accommodation compartment (73) for accommodating the plug connector part (45).

8. Cleaning apparatus according to Claim 7, **characterized in that** guide elements (66, 67, 77, 78) which interact with one another are disposed on the accommodation compartment (73) and on the plug connector part (45).

9. Cleaning apparatus according to Claim 8, **characterized in that** the guide elements comprise guide ribs (66, 67) and guide grooves (77, 78) which receive these guide ribs.

10. Cleaning apparatus according to any one of the preceding Claims, **characterized in that** a guide groove (77, 78) is in each case provided on the plug connector part (45) on sides which face away from each other, and a guide rib (66, 67) which is provided on the mounting part (44) enters the guide groove.

11. Cleaning apparatus according to any one of the preceding Claims, **characterized in that** the mounting part (44) comprises at least one positively locking element (59, 60) for establishing a positively locking connection to a battery (41).

12. Cleaning apparatus according to Claim 11, **characterized in that** the at least one positively locking element is configured as a guide rail (59, 60).

13. Cleaning apparatus according to Claim 11 or 12, **characterized in that** the mounting part (44) has two positively locking elements (59, 60) which are spaced apart from one another and between which the plug connector part (45) is positionable.

14. Cleaning apparatus according to Claim 13, **characterized in that** the two positively locking elements (59, 60) are fixedly connected to one another by means of a connecting wall (62) of the mounting part (44) and, together with the connecting wall (62), delimit an accommodation compartment (73) for accommodating the plug connector part (45).

15. Cleaning apparatus according to Claim 14, **characterized in that** the connecting wall (62) has an opening (63) which receives a projection (76) of the plug connector part (45).

16. Cleaning apparatus according to any one of Claims 11 to 15, **characterized in that** the at least one positively locking element (59, 60) is disposed on a front face of the mounting part (44), which front face faces the interior of the battery chamber (35) when the mounting part (44) is inserted into the battery chamber (35).

17. Cleaning apparatus according to Claim 16, **characterized in that** at its front face the mounting part (44) forms a contact surface (55) for contact by a battery (41) above the at least one positively locking element (59, 60).

18. Cleaning apparatus according to any one of the preceding Claims, **characterized in that** the chamber wall is configured as a pivotable flap (37) which closes an access opening of the battery chamber (35).

19. Cleaning apparatus according to any one of the preceding Claims, **characterized in that** the battery chamber (35) can be fitted with at least two rechargeable batteries (41, 81), it being possible to alternatively operate the cleaning apparatus (10) with one of the batteries (41; 81) which are inserted into the battery chamber.

20. Cleaning apparatus according to any one of the preceding Claims, **characterized in that** the cleaning apparatus is configured as a suction apparatus (10) comprising a cleaning unit in the form of a suction unit (28) and comprising a dirt-collection container (16) which has a suction inlet (17) and is in flow connection with the suction unit (28).

21. Cleaning apparatus according to any one of the preceding Claims, **characterized in that** the housing (12) comprises a housing lower part (13) and a housing upper part (14) which can be placed onto the housing lower part, the cleaning unit (28) and the battery chamber (35) being disposed in the housing upper part (14).

## Revendications

1. Appareil de nettoyage (10), comprenant un organe de nettoyage, actionné par moteur électrique, et un carter (12), qui comporte un compartiment pour batteries (35), destiné à recevoir au moins une batterie (41) rechargeable, sachant qu'un dispositif de liaison (43) avec une partie de fixation mécanique (44) et un connecteur électrique à fiches (45) est agencé dans ledit compartiment pour batteries (35) pour réaliser une liaison électrique et mécanique entre la batterie (41) et l'appareil de nettoyage (10), **caractérisé en ce que** la partie de fixation (44) est maintenue de manière amovible dans le compartiment pour batteries (35), et le connecteur à fiches (45) peut être relié de manière amovible au choix avec la partie de fixation (44) ou avec une paroi de compartiment (37) du compartiment pour batteries (35).

2. Appareil de nettoyage selon la revendication 1, **caractérisé en ce que** la paroi de compartiment (37) comporte un logement pour connecteur (83) destiné à l'insertion du connecteur à fiches (45).

3. Appareil de nettoyage selon la revendication 2, **caractérisé en ce que** des éléments de guidage (84, 85, 77, 78), coopérant entre eux, sont agencés sur le logement pour connecteur (83) et sur le connecteur à fiches (45).

4. Appareil de nettoyage selon la revendication 3, **caractérisé en ce que** les éléments de guidage comportent des nervures de guidage (84, 85) et des rainures de guidage (77, 78) recevant celles-ci.

5. Appareil de nettoyage selon l'une quelconque des revendications précédentes, **caractérisé en ce que** sur le connecteur à fiches (45), sur des côtés opposés l'un à l'autre, est agencée respectivement une rainure de guidage (77, 78), dans laquelle pénètre une nervure de guidage (84, 85) maintenue à la paroi de compartiment (37).

6. Appareil de nettoyage selon l'une quelconque des revendications 2 à 5, **caractérisé en ce que** la partie de fixation (44) peut être assemblée de manière amovible à la paroi de compartiment (37), sachant qu'à cette occasion ladite partie de fixation recouvre le logement pour connecteur (83).

7. Appareil de nettoyage selon l'une quelconque des revendications précédentes, **caractérisé en ce que** la partie de fixation (44) comporte un casier (73) destiné à recevoir le connecteur à fiches (45).

8. Appareil de nettoyage selon la revendication 7, **caractérisé en ce que** des éléments de guidage (66, 67, 77, 78), coopérant entre eux, sont agencés sur le casier (73) et sur le connecteur à fiches (45).

9. Appareil de nettoyage selon la revendication 8, **caractérisé en ce que** les éléments de guidage comportent des nervures de guidage (66, 67) et des rainures de guidage (77, 78) recevant celles-ci.

10. Appareil de nettoyage selon l'une quelconque des revendications précédentes, **caractérisé en ce que** sur le connecteur à fiches (45), sur des côtés opposés l'un à l'autre, est agencée respectivement une rainure de guidage (77, 78), dans laquelle pénètre une nervure de guidage (66, 67) maintenue à la partie de fixation (44).

11. Appareil de nettoyage selon l'une quelconque des revendications précédentes, **caractérisé en ce que** la partie de fixation (44) comporte au moins un élément pour assemblage par complémentarité de formes (59, 60) en vue de réaliser un assemblage par complémentarité de formes avec une batterie (41).

12. Appareil de nettoyage selon la revendication 11, **caractérisé en ce que** ledit au moins un élément pour assemblage par complémentarité de formes est réalisé sous la forme d'un rail de guidage (59, 60).

13. Appareil de nettoyage selon la revendication 11 ou 12, **caractérisé en ce que** la partie de fixation (44) comporte deux éléments pour assemblage pair complémentarité de formes (59, 60), qui sont situés à distance l'un de l'autre et entre lesquels peut être positionné le connecteur à fiches (45).

14. Appareil de nettoyage selon la revendication 13, **caractérisé en ce que** les deux éléments pour assemblage par complémentarité de formes (59, 60) sont reliés de manière rigide l'un à l'autre par l'intermédiaire d'une paroi de liaison (62) de la partie de fixation (44), et délimitent conjointement avec la paroi de liaison (62) un casier (73) destiné à recevoir le connecteur à fiches (45).

15. Appareil de nettoyage selon la revendication 14, **caractérisé en ce que** la paroi de liaison (62) comporte une ouverture (63) qui reçoit une surélévation (76) du connecteur à fiches (45).

16. Appareil de nettoyage selon l'une quelconque des revendications 11 à 15, **caractérisé en ce que** ledit au moins un élément pour assemblage par complémentarité de formes (59, 60) est disposé sur un côté frontal de la partie de fixation (44), lequel, lorsque la partie de fixation (44) est insérée dans le compartiment pour batteries (35), est tourné vers l'intérieur du compartiment pour batteries (35).

17. Appareil de nettoyage selon la revendication 16, **caractérisé en ce que** la partie de fixation (44), du côté frontal, forme, au-dessus dudit au moins un élément pour assemblage par complémentarité de formes (59, 60), une surface d'appui (55) pour recevoir en appui une batterie (41).

18. Appareil de nettoyage selon l'une quelconque des revendications précédentes, **caractérisé en ce que** la paroi de compartiment est réalisée sous la forme d'un volet (37) pivotant, qui obture une ouverture d'accès du compartiment pour batteries (35).

19. Appareil de nettoyage selon l'une quelconque des revendications précédentes, **caractérisé en ce que** le compartiment pour batteries (35) peut recevoir au moins deux batteries (41, 81) rechargeables, l'appareil de nettoyage (10) pouvant être actionné en alternance avec l'une des batteries (41 ; 81) insérées dans le compartiment pour batteries.

20. Appareil de nettoyage selon l'une quelconque des revendications précédentes, **caractérisé en ce que** l'appareil de nettoyage est réalisé sous la forme d'un aspirateur (10), comportant un organe de nettoyage en forme d'organe d'aspiration (28) et un collecteur de poussières (16), qui comporte une entrée d'aspiration (17) et qui est en liaison d'écoulement avec l'organe d'aspiration (28).

21. Appareil de nettoyage selon l'une quelconque des revendications précédentes, **caractérisé en ce que** le carter (12) comporte une partie inférieure de carter (13) et une partie supérieure de carter (14), propre à être posée sur cette dernière, l'organe de nettoyage (28) et le compartiment pour batteries (35) étant disposés dans la partie supérieure de carter (14).
